Europäisches Patentamt

European Patent Office

Office européen des brevets

(19)

(11) Veröffentlichungsnummer: **0 259 323**
**B1**

(12) **EUROPÄISCHE PATENTSCHRIFT**

(45) Veröffentlichungstag der Patentschrift: **25.07.90**

(51) Int. Cl.⁵: **A 01 G 25/06**

(21) Anmeldenummer: **86903105.4**

(22) Anmeldetag: **13.05.86**

(86) Internationale Anmeldenummer:
**PCT/AT86/00042**

(87) Internationale Veröffentlichungsnummer:
**WO 86/06578 20.11.86 Gazette 86/25**

(54) **ROHR ZUR BEWÄSSERUNG VON PFLANZEN.**

(30) Priorität: **15.05.85 AT 1457/85**

(43) Veröffentlichungstag der Anmeldung:
**16.03.88 Patentblatt 88/11**

(45) Bekanntmachung des Hinweises auf die
Patenterteilung:
**25.07.90 Patentblatt 90/30**

(84) Benannte Vertragsstaaten:
**BE CH DE FR GB IT LI LU NL SE**

(56) Entgegenhaltungen:
**WO-A-81/01580**
**US-A-3 552 654**
**US-A-3 777 987**

(73) Patentinhaber: **ARPE-PLAST**
**KUNSTOFFVERARBEITUNG GESELLSCHAFT**
**M.B.H.**
**Feldweg 6**
**A-6111 Volders (AT)**

(72) Erfinder: **PRAMSOLER, Arnold**
**Feldweg 6**
**A-6111 Volders (AT)**

(74) Vertreter: **Torggler, Paul, Dr. et al**
**Patentanwälte Dr. Paul Torggler Dr. Engelbert**
**Hofinger Wilhelm-Greil-Strasse 16**
**A-6020 Innsbruck (AT)**

Courier Press, Leamington Spa, England.

**Beschreibung**

Die Erfindung betrifft ein Rohr zur Bewässerung von Pflanzen, insbesondere zur Wurzelbewässerung, mit einem im wesentlichen einen kreisförmigen Querschnitt aufweisenden und mit Durchtrittsöffnungen versehenen Zuleitungsrohr, an dessen Außenfläche zumindest im Bereich seiner Durchtrittsöffnungen mindestens eine Faserstoffschicht angeordnet ist, sowie mit einem äußeren Hüllrohr. Weiters bezieht sich die Erfindung auf ein Verfahren zur Herstellung eines Rohres zur Bewässerung von Pflanzen.

Bei der Wurzelbewässerung von Pflanzen ist wichtig, den Wasseraustritt aus den im Erdreich verlegten Rohren zur Bewässerung möglichst gut zu dosieren, um eine Überfeuchtung des Erdreiches zu verhindern. Gleichzeitig soll ein Hineinwachsen der Wurzeln in das Bewässungsrohr und eine Beschädigung des Rohres bzw. Verlegung der Austrittsöffnungen durch das Erdreich vermieden werden.

Es ist bereits ein Bewässerungsrohr bekannt (US—PS 3 302 408), bei dem ein mit Durchtrittsöffnungen versehenes Kunststoffrohr zur Regulierung des Wasseraustritts ganz mit einer Schicht aus sehr feinen Glasfibern und einem darüberliegenden Kunststoffnetz umgeben ist, wobei das ganze Rohr mit einem Draht spiralförmig umwickelt und damit zusammengehalten ist. Dieses bekannte Rohr weist jedoch den Nachteil auf, daß das außenliegende Kunststoffnetz etwa durch Steine im Erdreich oder durch ein Arbeitsgerät leicht beschädigt werden kann. Außerdem ist der Zuschnitt auf bestimmte Längen durch den notwendigerweise herumgewikkelten Draht sehr aufwendig. Auch ein dichtes Verbinden einzelner Rohre, beispielsweise durch Zusammenstecken, ist nur schwer möglich.

Neben diesem Bewässerungsrohr mit kreisförmigem Querschnitt gibt es noch eine Vielzahl anderer Bewässerungsrohre mit komplizierten Rohrquerschnitten, welche ebenfalls zur Regulierung des Wasseraustritts poröse oder faserartige Schichten aufweisen. Der Nachteil derartiger Rohre besteht vor allem in der aufwendigen Herstellung und darin, daß eine dichte Verbindung von Rohren untereinander oder ein dichter Anschluß etwa an einen Vorratsbehälter sehr aufwendig ist.

Weiters bekannt ist ein dreischaliges Bewässerungsrohr mit einem inneren, elastischen und gelochten Zuleitungsrohr, einem gelochten äußeren Rohr und einer dazwischenliegenden Gewebeschicht, wobei die Durchtrittslöcher des inneren Zuleitungsrohres und des äußeren Rohres versetzt sind (US—PS 3 777 987). Bei diesem bekannten Rohr muß das meist zumindest leicht verschmutzte Wasser in Richtung der Gewebeschicht fließen, um von einer inneren Bohrung zu einer versetzten äußeren zu gelangen. Dadurch besteht die Gefahr einer Verschlammung und Verstopfung des Rohres.

Auch herstellungstechnisch weist das bekannte dreischalige Rohr Nachteile auf. Die Anbringung der äußeren Durchtrittsöffnungen bereitet nämlich Schwierigkeiten, da bei der nachträglichen Anbringung (Bohrung) dieser Durchtrittslöcher mitunter auch das darunterliegende Gewebe beschädigt wird. Werden die Durchtrittslöcher schon vorher in das äußere Rohr gebohrt, so ergibt sich das Problem, das innere Hüllrohr samt Gewebe in das äußere Rohr einzuschieben.

Aufgabe der Erfindung ist es daher, ein robustes und kostengünstiges Rohr der eingangs genannten Gattung bereitzustellen, bei dem die Gefahr einer Verschlammung oder Verstopfung weitgehend herabgesetzt ist und das einfach herzustellen ist. Weiters soll der Wasseraustritt dosiert und gezielt gerichtet erfolgen und ein Hineinwachsen von Wurzeln ins Rohrinnere verhindert werden.

Dies wird erfindungsgemäß dadurch erreicht, daß das aus einem wasserundurchlässigen Material, vorzugsweise aus Kunststoff bestehend Hüllrohr mit mindestens einem Längsschlitz versehen ist das das Zuleitungsrohr und die darauf angeordnete(n) Faserstoffschicht(en) abgesehen vom Längsschlitz ganz umschließt, und daß das Zuleitungsrohr nur im Bereich des Längsschlitzes des umgebenden Hüllrohres Durchtrittsöffnungen aufweist.

Es ist zwar bei einem im wesentlichen einwandigen Bewässerungsrohr bekannt (US—A—3 552 654), in dessen wasserundurchlässiger Außenhaut, die beim Extrudieren des Rohres auf der schaumstoffartigen, wasserdurchlässigen Wandung ausgebildet wird, einen oder mehrere Längsschlitze vorzusehen, aus denen das Wasser austreten kann. Die dünne Außenhaut eines derartigen Rohres ist jedoch im Gegensatz zu einem echten äußeren Hüllrohr, wie es beim erfindungsgemäßen Bewässerungsrohr vorgesehen ist, äußerst empfindlich und kann daher beim Verlegen im Erdreich durch spitze Steine etc. leicht verletzt werden, wodurch es zu einem unerwünschten undosierten Wasseraustritt kommt. Außerdem besteht bei diesem bekannten, im wesentlichen einwandigen Rohr auf Grund der weichen schaumstoffartigen Wandung kaum eine Möglichkeit, eine dichte Verbindung von Rohren untereinander bzw. an einem Wasserbehälter vorzusehen.

Beim erfindungsgemäßen Rohr strömt das Wasser senkrecht zur Oberfläche der Faserstoffschicht(en) durch diese hindurch. Leichte Verschlammungen, gegen die das vorliegende Rohr schon von vornherein weniger anfällig ist als das weiter oben erwähnte dreischalige Rohr der US—PS 3 777 987, lassen sich allenfalls durch einen kurzen Wasserstoß (kurzer Überdruck) nach außen drücken und damit bereinigen.

Durch das geschlitzte Hüllrohr ist die u.a. für den dosierten Wasseraustritt nötige Faserstoffschicht außerdem ausreichend gegen mechanische Beschädigungen von außen geschützt.

Durch den im wesentlichen kreisförmigen Querschnitt des Rohres mit der bis auf den Längsschlitz geschlossenen Außenfläche des Hüllrohres ist eine dichte Verbindung oder ein Anschluß der Rohre einfach möglich.

Ein weiterer Vorteil des erfindungsgemäßen Rohres besteht darin, daß der sich in Längsrichtung des Rohres erstreckende Längsschlitz eine Orientierung des Rohres in Verbindungs- oder Anschlußteilen erlaubt. Auch beim Zuschneiden von Rohren bleibt diese natürliche, die Wasseraustrittsrichtung festlegende Orientierung der zugeschnittenen Rohrstücke erhalten. Es hat sich nämlich gezeigt, daß der Orientierung des Längsschlitzes eine große Bedeutung zukommt. Beispielsweise kann mit einem nach unten weisenden Schlitz bei einer Bewässerung von mehrjährigen Pflanzen eine Algenbildung nachhaltig vermieden werden.

Damit das Hüllrohr konzentrisch zum inneren Zuleitungsrohr liegt, ist es günstig, wenn das Zuleitungsrohr gemäß einem bevorzugten Merkmal der Erfindung von einer oder mehreren Faserstoffschichten im wesentlichen vollständig umhüllt ist. Insbesondere bei Verwendung dünner Faserstoffschichten kann die Faserstoffschicht aber auch nur im Bereich des Längsschlitzes angeordnet sein. Dann ist es u.U. von Vorteil, wenn das Hüllrohr und das Zuleitungsrohr an den Stellen, an denen keine Faserstoffschicht zwischen ihnen angeordnet ist, direkt miteinander verschweißt, vernetzt oder verklebt sind.

Vorzugsweise ist es vorgesehen, daß das Material des Hüllrohres und/oder des Zuleitungsrohres in die Faserstoffschicht(en) eingedrungen ist. Damit ist eine innige Verbindung zwischen Faserstoffschicht und Hüllrohr bzw. Zuleitungsrohr möglich, die u.a. auch verhindert, daß eine Faserstoffschicht unter dem Einfluß des Wasserdruckes im Zuleitungsrohr durch den Längsschlitz im Hüllrohr nach außen gedrängt wird.

Gemäß einem weiteren bevorzugten Merkmal der Erfindung ist es vorgesehen, daß das Hüllrohr zumindest auf einem Teil seiner zum Zuleitungsrohr weisenden Innenfläche durch die Faserstoffschicht(en) hindurch mit dem Zuleitungsrohr verschweißt, vernetzt oder verklebt ist. Dadurch ist eine feste Verbindung zwischen Hüllrohr und Zuleitungsrohr möglich. Außerdem bildet die mit Kleber oder Harz durchtränkte und anschließend ausgehärtete bzw. die vom Material der miteinander verschweißten Hull- und Zuleitungsrohre durchsetzte Faserstoffschicht eine Verstärkungsschicht, welche dem ganzen Bewässerungsrohr eine ausgesprochen große mechanische Festigkeit verleiht. Vorzugsweise bestehen das Hüllrohr und das Zuleitungsrohr aus thermoplastischem Kunststoff. Eine Verstärkungsschicht könnte dann beispielsweise aus einem im Epoxidharz getränkten Glasfaservlies bestehen.

Eine weitere bevorzugte Ausführungsform des erfindungsgemäßen Rohres ist dadurch gekennzeichnet, daß das Hüllrohr und/oder das Zuleitungsrohr zumindest auf einem Teil ihrer zur Faserstoffschicht weisenden Fläche mit der (den) Faserstoffschicht(en) aus thermoplastischem Kunststoff verschweißt ist. Ein derartiges Rohr ist besonders einfach und billig herzustellen und weist trotzdem eine innige Verbindung zwischen dem Hüll- und Zuleitungsrohr einerseits und der Faserstoffschicht andererseits auf.

Ein weiteres bevorzugtes Merkmal der Erfindung besteht darin, daß die Faserstoffschicht mindestens teilweise aus einem nicht verrottbaren Material, beispielsweise aus Kunststoff besteht. Besonders eignen sich feinmaschige Gewebe. Eine derartige Faserstoffschicht erlaubt eine ausreichende Dosierung des Wasseraustritts und verhindert dauerhaft ein Eindringen von Wurzeln. Die Verstopfungsgefahr ist gering.

Eine weitere bevorzugte Ausführungsform der Erfindung besteht darin, daß das Hüllrohr auf das mit der (den) Faserstoffschicht(en) umhüllte Zuleitungsrohr aufgeschrumpft ist. Dabei kann das Hüllrohr und das Zuleitungsrohr jeweils sich axial erstreckende, korrespondierende Eingriffsmittel, beispielsweise Nut und Feder, aufweisen, welche durch Formschluß ein gegenseitiges Verdrehen der beiden Rohre verhindern.

Eine weitere Aufgabe der Erfindung ist es, ein Verfahren zur einfachen Herstellung eines Rohres zur Bewässerung mit einem perforierten Zuleitungsrohr, einem geschlitzten Hüllrohr und mindestens einer dazwischenliegenden Faserstoffschicht anzugeben.

Das erfindungsgemäße Verfahren geht dabei von einem bekannten Verfahren aus, bei dem in einem Extruder ein einen im wesentlichen kreisförmigen Querschnitt aufweisendes Zuleitungsrohr extrudiert wird. Erfindungsgemäß ist das Verfahren dann dadurch gekennzeichnet, daß dieses Zuleitungsrohr in einer an den Extruder anschließenden Station mit Durchtrittsöffnungen versehen wird, daß dann eine Faserstoffschicht bzw. Faserstoffschichten, beispielsweise Gewebebänder auf das sich in Längsrichtung bewegende Zuleitungsrohr aufgelegt wird (werden), worauf das Zuleitungsrohr und die Faserstoffschicht(en) in einem weiteren Extruder mit einem Hüllrohr umgeben werden, wobei das Zuleitungsrohr und die Faserstoffschicht(en) im zweiten Extruder nur auf einem Großteil ihres Umfanges mit dem Hüllrohr umgeben werden, wodurch der Längsschlitz im Hüllrohr über den Durchtrittsöffnungen freigelassen wird.

Die Erfindung wird nachstehend durch Ausführungsbeispiele anhand der Figuren der Zeichnungen näher erläutert.

Es zeigen Fig. 1 eine schematisch perspektivische Ansicht eines Ausführungsbeispieles eines erfindungsgemäßen Rohres, Fig. 2 und Fig. 3 jeweils einen Querschnitt durch weitere Ausführungsbeispiele des Rohres und Fig. 4 eine schematische Darstellung einer Einrichtung zur Durchführung eines Ausführungsbeispieles des erfindungsgemäßen Verfahrens zur Herstellung eines Rohres zur Bewässerung.

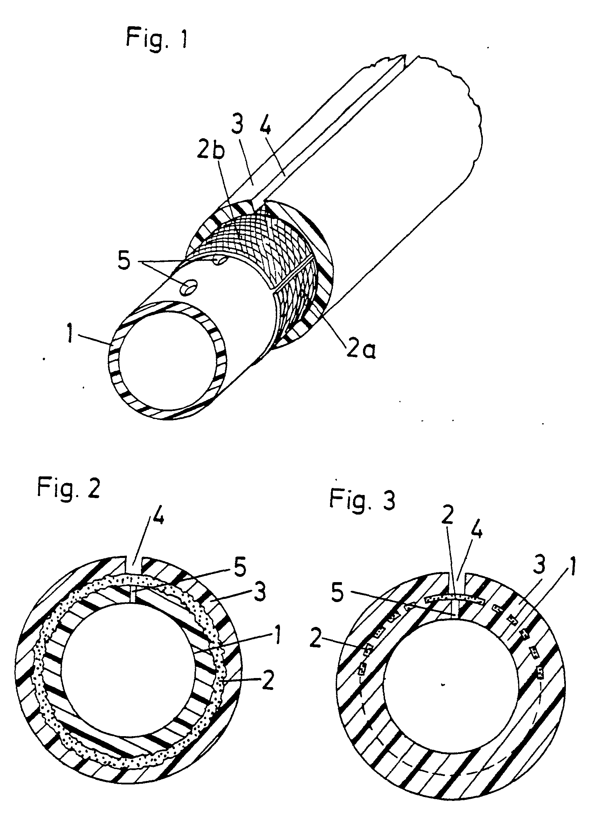

Das in Fig. 1 gezeigte Rohr besteht im wesentlichen aus einem mit Bohrungen 5 versehenen Zuleitungsrohr 1 aus thermoplastischem Kunststoff, an dessen Außenfläche zwei aus einem unverrottbaren Kunststoffgewebe bestehende Faserstoffschichten 2a, 2b angeordnet sind, und einem mit einem Längsschlitz 4 versehenen Hüllrohr 3 aus thermoplastischem Kunststoff, welches beispielsweise auf das Zuleitungsrohr 1 samt den darauf angeordneten Faserstoffschichten 2a, 2b extrudiert ist. Das Hüllrohr 3 liegt bis auf den Längsschlitz 4 überall fest an den Faserstoffschichten 2a, 2b an, wodurch sich ein äußerst robustes Bewässerungsrohr ergibt, das gegen mechanische Belastungen von außen, etwa durch größere Steine oder durch Gartengeräte, unempfindlich ist.

Der Wasseraustritt des im Zuleitungsrohr 1 zugeführten Wassers über den Längsschlitz 4 des Hüllrohres 3 und die darunterliegenden Bohrungen 5 im Zuleitungsrohr 1, die erfindungsgemäß nur im Bereich des Längschlitzes 4 liegen, wird durch die Faserstoffschicht 2b dosiert, durch die das Wasser im wesentlichen senkrecht durchtritt und die gleichzeitig ein Hineinwachsen von Wurzeln in das Innere des Zuleitungsrohres 1 verhindert. Durch die in Fig. 1 untere Faserstoffschicht 2a wird das Zuleitungsrohr 1 konzentrisch im Hüllrohr 3 gehalten.

Bei dem in Fig. 2 gezeigten Ausführungsbeispiel des Rohres besteht die Faserstoffschicht 2 aus einem Glasfaservlies, in welches das Material des thermoplastischen Hüllrohres 3 und des Zuleitungrohres 1 eingedrungen ist. Nur im Bereich des Längschlitzes 4 bzw. der Bohrungen 5 ist kein Material in das Glafaservlies eingedrungen. Dadurch werden das schützende Hüllrohr 3 und das Zuleitungsrohr 1 einerseits über die Faserstoffschicht 2 innig miteinander verbunden, andererseits wirkt dieselbe Faserstoffschicht 2 im Bereich des Längsschlitzes 4 als Dosiervorrichtung für den Wasseraustritt und als Schutz gegen das Eindringen von Wurzeln.

Bestehen sowohl das Hüllrohr 3 als auch das Zuleitungsrohr 1 aus thermoplastischem Kunststoff, so besteht die Möglichkeit, beide Rohre 1, 3 miteinander zu verschweißen. Dieses Verschweißen kann durch die Faserstoffschicht 2 hindurch erfolgen, wie dies im oberen Teil des in Fig. 3 gezeigten Rohres der Fall ist, oder direkt zwischen den beiden Rohren 1, 3 erfolgen, wenn keine Faserstoffschicht 2 dazwischen liegt (unterer Teil des in Fig. 3 gezeigten Rohres). Bei einer thermoplastischen Faserstoffschicht kann diese sogar mitverschweißt werden. Jedenfalls bleibt die Faserstoffschicht 2 jedoch im Bereich des Längsschlitzes 4 des Hüllrohres 3 erhalten.

Je nach verwendeten Materialien besteht neben dem Veschweißen von Hüllrohr und Zuleitungsrohr auch die Möglichkeit, diese miteinander zu vernetzen oder zu verkleben. Nahezu immer bildet eine z.B. mit Kleber oder Harz (Vernetzungsmittel) getränkte und anschließend ausgehärtete Faserstoffschicht eine faserverstärkte Schicht, welche die mechanische Festigkeit des Rohres erhöht.

Die Erfindung ist seblstverständlich nicht auf die obigen Ausführungsbeispiele von Rohren beschränkt. Beispielsweise ist es auch möglich, das Hüllrohr auf das Zuleitungsrohr und die Faserstoffschicht(en) aufzuschrumpfen. Außerdem können auch mehrere Faserstoffschichten in Lagen übereinander angeordnet sein. Weiters können die Durchtrittsöffnungen im Zuleitungsrohr und die Längsschlitze im Hüllrohr im Rahmen der Erfindung anders ausgebildet sein als dies in den Fig. 1 bis 3 dargestellt ist.

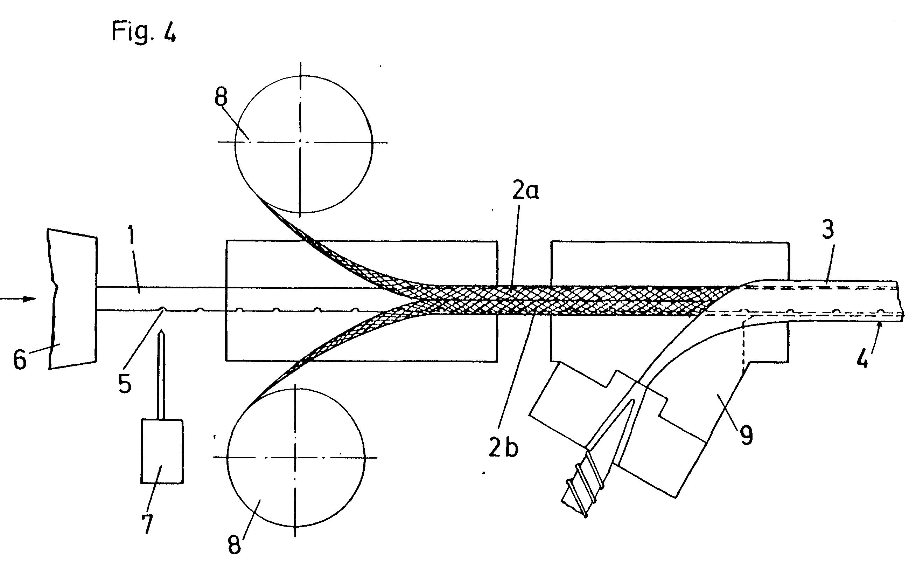

In Fig. 4 ist eine Einrichtung zur Durchführung eines erfindungsgemäßen Herstellungsverfahrens für ein Bewässerungsrohr schematisch dargestellt. In einem ersten Extruder 6 wird das einen kreisförmigen Querschnitt aufweisende Zuleitungsrohr 1 extrudiert, welches in einer anschließenden Station 7 mit Durchtrittsöffnungen versehen wird. Hierauf werden die auf Rollen 8 aufgerollten Gewebebänder als Faserstoffschichten 2a, 2b auf das gelochte Zuleitungsrohr 1 aufgelegt. Dabei besteht je nach Material die Möglichkeit, diese Faserstoffschichten 2a, 2b mit dem Zuleitungsrohr 1 zu verschweißen, zu vernetzen oder zu verkleben. Es ist aber auch möglich, die Gewebänder 2a, 2b vorerst auf das Zuleitungsrohr nur aufzulegen und erst durch das darüber extrudierte Hüllrohr 3 einen festen Verband zwischen dem Hüllrohr 3, den Faserstoffschichten 2a 2b und dem Zuleitungsrohr 1 herzustellen. Auf jeden Fall wird das Hüllrohr 1 beim vorliegenden Verfahren in einem zweiten Extruder 9 extrudiert, wobei der Längsschlitz 4 über den Durchtrittsöffnungen 5 des Zuleitungsrohres 1 freigelassen wird.

Mit diesem Verfahren lassen sich Bewässsrungsrohre endlos herstellen. Dabei könenn dann Rohre in nahezu beliebiger Länge abgeschnitten werden. Diese sind bei der Verlegung etwa über Steckmuffen oder T-Stücke einfach und dicht zusammensteckbar und damit gut auf die Abmessungen des zu bewässernden Gebietes abstimmbar.

## Patentansprüche

1. Rohr zur Bewässerung von Pflanzen, insbesondere zur Wurzelbewässerung, mit einem im wesentlichen einen kreisförmigen Querschnitt aufweisenden und mit Durchtrittsöffnungen (5) versehenen Zuleitungsrohr (1), an dessen Außenfläche zumindest im Bereich seiner Durchtrittsöffnungen (5) mindestens eine Faserstoffschicht (2a, 2b) angeordnet ist, sowie mit einem äußeren Hüllrohr (3), dadurch gekennzeichnet, daß das aus einem wasserundurchlässen Material, vorzugsweise aus Kunststoff, bestehende Hüllrohr (3) mit mindestens einem Längsschlitz (4) versehen ist das das Zuleitungsrohr (1) und die darauf angeordnete(n) Faserstoffschicht(en) (2a, 2b) abgesehen vom Längsschlitz (4) ganz umschließt, und daß das Zuleitungsrohr (1) nur im Bereich des Längsschlitzes (4) des umgebenden Hüllrohres (3) Durchtrittsöffnungen (5) aufweist.

2. Rohr nach Anspruch 1, dadurch gekennzeichnet, daß das Zuleitungsrohr (1) von einer oder mehreren Faserstoffschicht(en) (2a, 2b) im wesentlichen vollständig umhüllt ist.

3. Rohr nach Anspruch 1 oder 2, dadurch gekennzeichnet, daß das Material des Hüllrohres (3) und/oder des Zuleitungsrohres (1) in die Faserstoffschicht(en) eingedrungen ist.

4. Rohr nach einem der Ansprüche 1 bis 3, dadurch gekennzeichnet, daß das Hüllrohr (3) zumindest auf einem Teil seiner zum Zuleitungsrohr (1) weisenden Innenfläche durch die Faserstoffschicht(en) (2) hindurch mit dem Zuleitungsrohr (1) verschweißt, vernetzt oder verklebt ist.

5. Rohr nach einem der Ansprüche 1 bis 4, dadurch gekennzeichnet, daß das Hüllrohr (3) und/oder das Zuleitungsrohr (1) zumindest auf einem Teil ihrer zur Faserstoffschicht (2) weisenden Fläche mit der (den) Faserstoffschicht(en) (2) aus thermoplastischem Kunststoff verscweißt ist.

6. Rohr nach einem der Ansprüche 1, 3, 4 oder 5, dadurch gekennzeichnet, daß das Hüllrohr (3) und das Zuleitungsrohr (1) an den Stellen, an denen keine Faserstoffschicht (2) zwischen ihnen angeordnet ist, direkt miteinander verschweißt, vernetzt oder verklebt sind.

7. Rohr nach einem der Ansprüche 1 bis 6, dadurch gekennzeichnet, daß das Zuleitungsrohr (1) und/oder das Hüllrohr (3) aus thermoplastischem Kunststoff bestehen.

8. Rohr nach einem der Ansprüche 1 bis 7, dadurch gekennzeichnet, daß die Faserstoffschicht (2) mindestens teilweise aus einem nicht verrottbaren Material, beispielsweise aus Kunststoff besteht.

9. Rohr nach einem der Ansprüche 1 bis 8, dadurch gekennzeichnet, daß die Faserstoffschicht (2) mindestens teilweise aus einem feinmaschigen Gewebe aus thermoplastischem Kunststoff besteht.

10. Rohr nach einem der Ansprüche 1 bis 9, dadurch gekennzeichnet, daß die Faserstoffschicht (2) mindestens teilweise aus einem Glasfaservlies besteht.

11. Rohr nach einem der Ansprüche 1 bis 10, dadurch gekennzeichnet, daß das Hüllrohr (3) auf das mit der (den) Faserstoffschicht(en) (2) umhüllte Zuleitungsrohr (1) aufgeschrumpft ist.

12. Rohr nach Anspruch 11, dadurch gekennzeichnet, daß das Hüllrohr (3) und das Zuleitungsrohr (1) jeweils sich axial erstreckende, korrespondierende Eingriffsmittel, beispielsweise Nut und Feder, aufweisen, welche durch Formschluß ein gegenseitiges Verdrehen der beiden Rohre verhindern.

13. Verfahren zur Herstellung eines Rohres zur Bewässerung von Pflanzen nach Anspruch 1, bei welchem Verfahren in einem Extruder (6) ein einen im wesentlichen kreisförmiger Querschnitt aufweisendes Zuleitungsrohr (1) extrudiert wird, dadurch gekennzeichnet, daß dieses Zuleitungsrohr (1) in einer an den Extruder (6) anschließenden Station (7) mit Durchtrittsöffnungen (5) versehen wird, daß dann eine Faserstoffschicht bzw. Faserstoffschichten (2a, 2b), beispielsweise Gewebebänder, auf das sich in Längsrichtung bewegende Zuleitungsrohr (1) aufgelegt wird (werden), worauf das Zuleitungsrohr (1) und die Faserstoffschicht(en) in einem weiteren Extruder (9) mit einem Hüllrohr (3) umgeben werden, wobei das Zuleitungsrohr (1) und die Faserstoffschicht(en) (2a, 2b) im zweiten Extruder (1) nur auf einem Großteil ihres Umfanges mit dem Hüllrohr (3) umgeben werden, wodurch der Längsschlitz (4) im Hüllrohr (3) über den Durchtrittsöffnungen (5) freigelassen wird.

## Revendications

1. Tuyau pour l'irrigation de plantes, en particulier pour l'irrigation des racines, avec un tuyau d'adduction (1) présentant essentiellement une section circulaire et muni d'ouvertures de sortie (5), sur la surface extérieure duquel est disposée, tout au moins dans la région de ses ouvertures de sortie (5), au moins une couche de matière fibreuse (2a, 2b) ainsi qu'avec un tuyau extérieur formant une gaine (3), caractérisé en ce que le tuyau formant une gaine (3), constitué d'une matière imperméable à l'eau, de préférence d'une matière plastique, est pourvu d'au moins une fente longitudinale (4), ladite gaine (3) entourant complètement le tuyau d'adduction (1) et la ou les couches de matière fibreuse (2a, 2b) disposées sur celui-ci, à l'exception de la fente longitudinale (4), et en ce que le tuyau d'adduction (1) présente des ouvertures de sortie (5) seulement dans la région de la fente longitudinale (4) du tuyau formant une gaine (3) qui l'entoure.

2. Tuyau selon la revendication 1, caractérisé en ce que le tuyau d'adduction (1) est essentiellement complètement entouré d'une ou plusieurs couches de matière fibreuse (2a, 2b).

3. Tuyau selon la revendication 1 ou 2, caractérisé en ce que la matière du tube formant une gaine (3) et/ou du tuyau d'adduction (1) est imprégnée dans la ou les couches de matière fibreuse.

4. Tuyau selon une des revendications 1 à 3, caractérisé en ce que le tuyau formant une gaine (3) est, tout au moins sur une partie de sa surface interne tournée vers le tuyau d'adduction, soudé, réticulé ou collé à travers la ou les couches de matière fibreuse (2) avec le tuyau d'adduction (1).

5. Tuyau selon une des revendications 1 à 4, caractérisé en ce que le tuyau formant une gaine (3) et/ou le tuyau d'adduction (1) est ou sont soudés, tout au moins sur une partie de leur surface tournée vers la couche de matière fibreuse (2) avec la ou les couches de matière fibreuse (2) constituée(s) de matière plastique thermoplastique.

6. Tuyau selon une des revendications 1, 3, 4 ou 5, caractérisé en ce que le tuyau formant une gaine (3) et le tuyau d'adduction (1) sont soudés, réticulés ou collés directement l'un avec l'autre aux endroits où il n'y a pas de couche de matière fibreuse (2) interposée entre eux.

7. Tuyau selon une des revendications 1 à 6, caractérisé en ce que le tuyau d'adduction (1) et/ou le tuyau formant une gaine (3) sont constitués de matière plastique thermoplastique.

8. Tuyau selon une des revendications 1 à 7, caractérisé en ce que la couche de matière fibreuse (2) est constituée tout au moins partiellement d'un matériau imputrescible, par exemple de matière plastique.

9. Tuyau selon une des revendications 1 à 8, caractérisé en ce que la couche de matière fibreuse (2) est constituée, tout au moins partiellement, d'un tissu à mailles fines en matière plastique thermoplastique.

10. Tuyau selon une des revendications 1 à 9, caractérisé en ce que la couche de matière fibreuse (2) est constituée, tout au moins partiellement, d'un tissu de fibre de verre.

11. Tuyau selon une des revendications 1 à 10, caractérisé en ce que le tuyau formant une gaine (3) est rétreint sur le tuyau d'adduction (1) entouré de la (les) couches de matière fibreuse (2).

12. Tuyau selon la revendication 11, caractérisé en ce que le tuyau formant une gaine (3) et le tuyau d'adduction (1) présentent chaque fois des moyens d'engrènement correspondants s'étendant axialement, par exemple une rainure et une languette, qui empêchent, par leur emboîtement, une rotation d'un des tuyaux par rapport à l'autre.

13. Procédé de fabrication d'un tuyau pour l'irrigation de plantes selon la revendication 1, dans lequel un tuyau d'adduction (1) présentant une section essentiellement circulaire est fabriqué par extrusion dans une extrudeuse (6), caractérisé en ce que ce tuyau d'adduction (1) est muni d'ouvertures de sortie (5) dans un poste (7) faisant suite à l'extrudeuse (6), en ce qu'ensuite une ou des couches de matière fibreuse (2a, 2b), par exemple des bandes de tissu, sont appliquées sur le tuyau d'adduction (1) se mouvant longitudinalement, après quoi le tuyau d'adduction (1) et la ou les couches de matière fibreuse sont entourés d'un tuyau formant une gaine (3) dans une deuxième extrudeuse (9), le tuyau d'adduction (1) et la ou les couches de matière fibreuse (2a, 2b) n'étant entourés, dans la deuxième extrudeuse (9), avec le tuyau formant une gaine (3) que sur seulement une majeure partie de leur périphérie, de telle manière que la fente longitudinale (4) dans le tuyau formant une gaine (3) reste libre au dessus des ouvertures de sortie (5).

**Claims**

1. A pipe for watering plants, in particular for watering roots, comprising a supply pipe (1) which is substantially of circular cross-section and which is provided with through openings (5) and at the outside surface of which there is at least one layer (2a, 2b) of fibre material at least in the region of its through openings (5), and an outer casing pipe (3), characterised in that the casing pipe (3) which comprises a material which is impervious to water, preferably plastics material, is provided with at least one longitudinal slit (4), which casing pipe entirely encloses the supply pipe (1) and the layer or layers (2a, 2b) of fibre material disposed thereon, apart from the longitudinal slit (4), and that the supply pipe (1) has through openings (5) only in the region of the longitudinal slit (4) in the casing pipe (3) enclosing same.

2. A pipe according to claim 1 characterised in that the supply pipe (1) is substantially completely enclosed by one or more layers (2a, 2b) of fibre material.

3. A pipe according to claim 1 or claim 2 characterised in that the material of the casing pipe (3) and/or the supply pipe (1) has penetrated into the layer or layers of fibre material.

4. A pipe according to one of claims 1 to 3 characterised in that at least on a part of its inside surface which faces towards the supply pipe (1), the casing pipe (3) is welded, glued or cross-linked to the supply pipe (1) through the layer or layers (2) of fibre material.

5. A pipe according to one of claims 1 to 4 characterised in that the casing pipe (3) and/or the supply pipe (1) is welded at least over a part of its surface which faces towards the layer (2) of fibre material, to the layer or layers (2) of thermoplastic fibre material.

6. A pipe according to one of claims 1, 3, 4 or 5 characterised in that the casing pipe (3) and the supply pipe (1) are directly welded, cross-linked or glued to each other at the locations at which there is no layer (2) of fibre material between them.

7. A pipe according to one of claims 1 to 6 characterised in that the supply pipe (1) and/or the casing pipe (3) are of thermoplastic material.

8. A pipe according to one of claims 1 to 7 characterised in that the layer (2) of fibre material at least partially comprises a rot-proof material, for example plastics material.

9. A pipe according to one of claims 1 to 8 characterised in that the layer (2) of fibre material at least partially comprises a fine-mesh woven cloth of thermoplastic material.

10. A pipe according to one of claims 1 to 9 characterised in that the layer (2) of fibre material at least partially comprises a glass fibre fleece.

11. A pipe according to one of claims 1 to 10 characterised in that the casing pipe (3) is shrunk on to the supply pipe (1) which is encased with the layer or layers (2) of fibre material.

12. A pipe according to claim 11 characterised in that the casing pipe (3) and the supply pipe (1) each have axially extending, corresponding engagement means, for example a groove and tongue, which by positive engagement prevent the two pipes from turning relative to each other.

13. A process for the production of a pipe for watering plants according to claim 1, in which process a supply pipe (1) of substantially circular cross-section is extruded in an extruder (6), characterised in that said supply pipe (1) is provided with through openings (5) in a station (7) adjoining the extruder (6), that then a layer or layers (2a, 2b) of fibre material, for example woven strips, is or are applied to the supply pipe (1) which is moving in the longitudinal direction, whereupon in a further extruder (9) the supply pipe (1) and the layer or layers of fibre are enclosed with a casing pipe (3), wherein the supply pipe (1) and the layer or layers (2a, 2b) of fibre material are in the second extruder (1) only surrounded with the casing pipe (3) over a large part of their periphery, whereby the longitudinal slit (4) is left free in the casing pipe (3) over the through openings (5).

Fig. 1

Fig. 2

Fig. 3

Fig. 4

EP 0 259 323 B1